# EUROPÄISCHE PATENTANMELDUNG

(11) **EP 0 821 019 A1**
(43) Veröffentlichungstag der Anmeldung: **28.01.1998**
(21) Anmeldenummer: 97112338.5
(22) Anmeldetag: 18.07.1997
(51) Int. Cl.: C08G 18/42

(54) **Verfahren zur Herstellung von Polyurethanhartschaumstoffen**

(30) Priorität: 26.07.1996 DE 19630283
(71) Anmelder: BASF AKTIENGESELLSCHAFT, 67056 Ludwigshafen (DE)
(72) Erfinder: Guettes, Bernd, 03238 Sallgast (DE); Lampert, Klaus, Dr., 67273 Weisenheim (DE); Knorr, Gottfried, Dr., 01987 Schwarzheide (DE); Tischer, Gerlinde, 01945 Ruhland (DE); Zieler, Ralf, 01994 Menro (DE)

(57) **Zusammenfassung**

Die Erfindung betrifft ein Verfahren zur Herstellung von Polyurethanhartschaumstoffen durch Umsetzung von
a) organischen und/oder modifizierten organischen Di- und/oder Polyisocyanaten mit
b) speziellen Polyesterpolyolen und/oder Polyetheresterpolyolen, herstellbar durch Polykondensation von Dicarbonsäuren mit mehrfunktionellen Alkoholen unter Verwendung von Polyalkylenterephthalaten und gegebenenfalls anschließende Umsetzung mit niederen Alkylenoxiden, sowie gegebenenfalls weiteren höhermolekularen Verbindungen mit mindestens zwei reaktiven Wasserstoffatomen und gegebenenfalls
c) niedermolekularen Kettenverlängerungs- und/oder Vernetzungsmitteln
   in Gegenwart von
d) Treibmitteln,
e) Katalysatoren sowie gegebenenfalls
f) weiteren Hilfsmitteln und/oder Zusatzstoffen,
das dadurch gekennzeichnet ist, daß die Herstellung der Polyesterpolyole und/oder Polyetheresterpolyole in einer stufenweisen Polykondensation erfolgt, wobei neben den Ausgangskomponenten in der ersten Stufe Polyalkylenterephthalat in die beginnende und/oder laufende Kondensation eingetragen wird und in mindestens einer weiteren Stufe katalytisch wirksame Substanzen zugegeben werden, sowie die Verwendung dieser Polyurethanhartschaumstoffe als Isoliermaterial für den Kühl- und Fernwärmebereich, als Sandwichmaterial im Bauwesen sowie als Stütz- und Gestaltungsmaterial im Möbelbereich.

## Beschreibung

Die Erfindung betrifft ein Verfahren zur Herstellung von Polyurethanhartschaumstoffen durch Umsetzung von
a) organischen und/oder modifizierten organischen Di- und/oder Polyisocyanaten mit
b) speziellen Polyesterpolyolen und/oder Polyetheresterpolyolen, herstellbar durch Polykondensation von Dicarbonsäuren mit mehrfunktionellen Alkoholen unter Verwendung von Polyalkylenterephthalaten und gegebenenfalls anschließende Umsetzung mit niederen Alkylenoxiden, sowie gegebenenfalls weiteren höhermolekularen Verbindungen mit mindestens zwei reaktiven Wasserstoffatomen und gegebenenfalls
c) niedermolekularen Kettenverlängerungs- und/oder Vernetzungsmitteln in Gegenwart von
d) Treibmitteln,
e) Katalysatoren sowie gegebenenfalls
f) weiteren Hilfsmitteln und/oder Zusatzstoffen.

Die Herstellung von Polyurethanhartschaumstoffen durch Umsetzung von organischen und/oder modifizierten organischen Di- und/oder Polyisocyanaten mit höhermolekularen Verbindung mit mindestens zwei reaktiven Wasserstoffatomen, insbesondere mit Polyetherpolyolen aus der Alkylenoxidpolymerisation beziehungsweise Polyesterpolyolen aus der Polykondensation von Alkoholen mit Dicarbonsäuren unter Mitverwendung von Polyurethankatalysatoren, Kettenverlängerungs-und/oder Vernetzungsmitteln, Treibmitteln und weiteren Hilfs- und Zusatzstoffen ist bekannt und wird in zahlreichen Patent-und Literaturveröffentlichungen beschrieben.

Beispielhaft genannt sei das Kunststoffhandbuch, BandVII, Polyurethane, Carl-Hanser-Verlag, München, 1. Auflage 1966, herausgegeben von Dr. R. Vieweg und Dr. A. Höchtlen, sowie 2. Auflage 1983 und 3. Auflage 1993, herausgegeben von Dr. G. Oertel. Durch geeignete Wahl der Aufbaukomponenten und ihrer Mengenverhältnisse können Polyurethanweichschaumstoffe mit sehr guten mechanischen Eigenschaften hergestellt werden.

Bei Einsatz von Polyesterpolyolen ist es üblich, Polykondensate aus aromatischen und/oder aliphatischen Dicarbonsäuren und Alkandiolen und/oder -triolen bzw. Etherdiolen einzusetzen. Es ist aber auch möglich, Polyesterabfälle und hier insbesondere Polyethylenterephthalat (PET)- bzw. Polybutylenterephthalat (PBT)-Abfälle zu verarbeiten. Hierfür sind eine ganze Reihe von Verfahren bekannt und beschrieben. Grundlage einiger Verfahren ist die Umwandlung des Polyesters in einen Diester der Terephthalsäure, z.B. in Dimethylterephthalat. In DE-A-1003714 bzw. US-A-5 051 528 werden derartige Umesterungen unter Einsatz von Methanol und Umesterungskatalysatoren durchgeführt. Alle diese Verfahren haben infolge komplizierter technologischer Schritte, z.B. Einsatz von Methanoldampf, und auch verstärkt unkontrolliert ablaufender Nebenreaktionen viele Nachteile.

Weitere Verfahren, z.B. nach DE-C-4227299, setzen zur Depolymerisation Umesterungskatalysatoren und Dialkylester zu. Als Katalysator werden Manganacetat bzw. Zinkverbindungen verwendet. Die Verfahren unterscheiden sich eigentlich nur durch den verwendeten Katalysator, in DE-A-4220473 werden zur Herstellung von PBT PET-Abfälle mit Titan- oder Zinnkatalysator und Butandiol-1,4 behandelt. In Polym. Mater. Sci. Eug. (1990) 63, S. 1029 - 1033, 5S, 1B, 6T, 19Q wird der Einsatz von Zn-acetat zur Glykolyse von PET-Abfällen beschrieben. Durch den Katalysatoreinsatz gemeinsam mit Alkohol gleich am Glykolysebeginn laufen Spaltungs- und Polykondensationsreaktionen gleichzeitig unkontrolliert nebeneinander ab, der PET-Abbau wird unterbrochen und es entstehen unlösliche Bestandteile (Trübungen), die eine Weiterverarbeitung zum Polyurethan behindern. Diese Nachteile werden in EP-A-134661 durch eine katalysatorfreie PET-Glykolyse mit Ethylenglykol und anschließende Alkoxylierung unter Einsatz von Natriumacetat als Katalysator vermieden. Der Glykolysestart verläuft gleichmäßig, bleibt aber sehr unvollständig. Es lassen sich dadurch nur bestimmte PET-Sorten aufarbeiten und der Zusatz des basischen Katalysators verstärkt eine Reihe von unerwünschten Hydrolysereaktionen und damit eine starke Erweiterung der Molgewichtsverteilung.

In UK-A-2030997 wird die Herstellung von Polyurethanhartschaum aus Polyalkylenterephthalat-Recyclatpolyolen beschrieben. Die Glykolyse der Polyalkylenterephthalate wird wie üblich bekannt durch einstufige Umsetzung mit Alkylenglykolen bzw. Glykolethern mit dem speziellen Zusatz von Bis-(2-hydroxy-ethoxyethyl)glutarat durchgeführt. Auch hierbei kommt es zu Inhomogenitäten und dem Ausfallen von oligomeren Spaltungs- und Umsetzungsprodukten sofort nach Abschluß der Umesterung der Polyalkylenterephthalate und insbesondere nach 2 - 3 Tagen Lagerung der Produkte. So kommt es bei der Anwendung derartiger polyolischer Produkte, ähnlich wie bei den nach EP-A-0710686 hergestellten Polyolen, zur Polyurethanherstellung schon vor der eigentlichen Polyurethanreaktion. Es entstehen stabile Ausfällungen der polyolischen Polyurethan-Komponente und daraus hergestellte Polyurethanhartschäume haben erhebliche physikomechanische Mängel. Das in EP-A-0710686 beschriebene Verfahren arbeitet darüberhinaus auch noch äußerst unwirtschaftlich, da u.a. große Mengen DEG zugeführt und in einer technisch nur schwer beherrschbaren Destillation bei Temperaturen <140°C abdestilliert werden müssen.

Der vorliegenden Erfindung lag die Aufgabe zugrunde, ein Verfahren zur Herstellung von Polyurethanhartschaumstoffen durch Umsetzung von insbesondere aromatischen Di- und/oder Polyisocyanaten mit speziellen Polyolen, die unter Mitverwendung aller technisch verfügbaren PET/PBT-Sorten hergestellt wurden, im Beisein üblicher Hilfs- und Zusatzstoffe aufzuzeigen, das unerwünschte Hydrolysereaktionen und qualitätsverschlechternde Molekulargewichtsverschiebungen vermeidet.

Diese Aufgabe wurde erfindungsgemäß dadurch gelöst, daß zur Herstellung der Polyurethanhartschaumstoffe spezielle Polyesterpolyole und/oder Polyetheresterpolyole, herstellbar durch Polykondensation von Dicarbonsäuren mit mehrfunktionellen Alkoholen unter Verwendung von Polyalkylenterephthalaten und gegebenenfalls anschließende Umsetzung mit niederen Alkylenoxiden, eingesetzt werden, wobei die Herstellung der Polyesterpolyole und/oder Polyetheresterpolyole in einer stufenweisen Polykondensation erfolgt, bei der neben den Ausgangskomponenten in der ersten Stufe Polyalkylenterephthalat in die beginnende und/oder laufende Kondensation eingetragen wird und in mindestens einer weiteren Stufe katalytisch wirksame Substanzen zugegeben werden.

Gegenstand der Erfindung ist demzufolge ein Verfahren zur Herstellung von Polyurethanhartschaumstoffen durch Umsetzung von
a) organischen und/oder modifizierten organischen Di- und/oder Polyisocyanaten mit
b) speziellen Polyesterpolyolen und/oder Polyetheresterpolyolen, herstellbar durch Polykondensation von Dicarbonsäuren mit mehrfunktionellen Alkoholen unter Verwendung von Polyalkylenterephthalaten und gegebenenfalls anschließende Umsetzung mit niederen Alkylenoxiden, sowie gegebenenfalls weiteren höhermolekularen Verbindungen mit mindestens zwei reaktiven Wasserstoffatomen und gegebenenfalls
c) niedermolekularen Kettenverlängerungs- und/oder Vernetzungsmitteln in Gegenwart von
d) Treibmitteln,
e) Katalysatoren sowie gegebenenfalls
f) weiteren Hilfsmitteln und/oder Zusatzstoffen,
das dadurch gekennzeichnet ist, daß die Herstellung der Polyesterpolyole und/oder Polyetheresterpolyole in einer stufenweisen Polykondensation erfolgt, wobei neben den Ausgangskomponenten in der ersten Stufe Polyalkylenterephthalat in die beginnende und/oder laufende Kondensation eingetragen wird und in mindestens einer weiteren Stufe katalytisch wirksame Substanzen zugegeben werden.

Gegenstand der Erfindung ist weiterhin die Verwendung dieser Polyurethanhartschaumstoffe als Isoliermaterial für den Kühl- und Fernwärmebereich, als Sandwichmaterial im Bauwesen sowie als Stütz- und Gestaltungsmaterial im Möbelbereich.

Es war überraschend und in keiner Weise vorhersehbar, daß durch diese gezielte mehrstufige Polykondensation/Umesterung, der genau abgestimmten Zugabe der Polyalkylenterephthalatprodukte und der anschließenden weiteren Zugabe von Katalysatoren und ggf. weiteren Carbonsäuren und/oder Alkoholen ein homogenes Polyolgemisch entsteht, das auch über Wochen selbst und im Gemisch als polyolisches Polyurethansystem homogen bleibt.

Weiterhin überraschend war auch, daß sich mit diesem Verfahren alle verfügbaren Polyalkylenterephthalatprodukte verlustlos zu homogenen Polyolen verarbeiten lassen. Die aus diesen Polyolgemischen hergestellten Polyurethanhartschäume sind von hoher Qualität, die Verarbeitung ist problemlos, Aushärtung und Fließfähigkeit sind optimal und die physikomechanischen Werte entsprechen den hohen Anforderungen der Kühlschrank-, Bau- und Fernwärmeindustrie.

Es wurde somit ein wirtschaftliches Verfahren zur Herstellung von Polyurethanhartschaumstoffen, die sich hervorragend als Isoliermaterial für den Kühl- und Fernwärmebereich, als Sandwichmaterial im Bauwesen sowie als Stütz- und Gestaltungsmaterial im Möbelbereich eignen, gefunden.

Die erfindungsgemäß einzusetzenden speziellen Polyesterpolyole und/oder Polyetheresterpolyole werden vorzugsweise hergestellt durch Polykondensation von Dicarbonsäuren mit mehrfunktionellen Alkoholen unter Verwendung von Polyalkylenterephthalaten und gegebenenfalls anschließende Umsetzung mit niederen Alkylenoxiden.

Die Herstellung der Polyesterpolyole und/oder Polyetheresterpolyole erfolgt erfindungsgemäß in einer stufenweisen Polykondensation. In der ersten Stufe der Polykondensation wird neben den Ausgangskomponenten, den Dicarbonsäuren und mehrfunktionellen Alkoholen, Polyalkylenterephthalat in die beginnende und/oder laufende Kondensation eingetragen. Das Vorkondensationsprodukt wird in mindestens einer weiteren Stufe mit katalytisch wirksamen Substanzen, gegebenenfalls in Kombination mit weiteren Anteilen an Dicarbonsäuren und/oder mehrfunktionellen Alkoholen, versetzt. Durch anschließende Umsetzung mit niederen Alkylenoxiden kann das Produkt zu Polyetheresterpolyolen modifiziert werden.

Das Polyalkylenterephthalat wird vorzugsweise bei einer Temperatur der Ausgangskomponenten bzw. des Kondensationsgemisches von 150 bis 250°C, insbesondere von 180 bis 240°C, unter Normaldruck oder unter leichtem Vakuum von 1 bis 200 mbar, insbesondere von 10 bis 100 mbar, zugegeben.

Die Polyalkylenterephthalate können einzeln oder im Gemisch untereinander eingesetzt werden. Vorzugsweise kommen PET und/oder PBT in Frage.

Insbesondere werden Polyalkylenterephthalatabfälle, wie PBT- und PET-Granulate aus dem Recycling von PBT- bzw. PET-Teilen, -Filmen, -Fasern und -Folien oder auch pastöse bzw. flüssige PBT-und PET-Abfälle der Produktion, eingesetzt.

Bei der Herstellung der erfindungsgemäß einzusetzenden Polyesterpolyole und/oder Polyetheresterpolyole kommen als Säurekomponenten die hierfür üblicherweise verwendeten Dicarbonsäuren, vorzugsweise Adipinsäure, Glutarsäure, Bernsteinsäure und/oder Phthalsäure und/oder deren Anhydride, insbesondere Phthalsäureanhydrid, zur Anwendung.

Die Dicarbonsäuren werden mit mehrfunktionellen Alkoholen, vorzugsweise Alkandiolen und/oder Alkantriolen mit 2 bis 10 Kohlenstoffatomen und/oder Etherdiolen mit 4 bis 20 Kohlenstoffatomen umgesetzt. Insbesondere werden Monoglykole und/oder Monotriole, wie beispielsweise Butandiol-1,3 und -1,4, Hexandiole, Neopentylglykol, Ethylen- und /oder Propylenglykol, Glyzerin und/oder Trimethylolpropan und als Etherdiole vorzugsweise Di-, Tri- und/oder Polyethylenglykole und/oder Di-, Tri- und/oder Polypropylenglykole mit einem mittleren Molekulargewicht von bis zu 1000 eingesetzt. Vorzugsweise werden als Diole Ethylen- und/oder Propylenglykol und als Triole Glyzerin und/oder Trimethylolpropan verwendet.

Als katalytisch wirksame Substanzen bei der Kondensationsreaktion werden bevorzugt Titan- und/oder Zinnverbindungen und/oder Lewis-säuren in Mengen bis 1000 ppm, beispielsweise Tetra-butylorthotitanat, Zinn(II)-octoat, Zinn(II)-chlorid oder Eisen(II)-chlorid, eingesetzt.

Die erfindungsgemäß hergestellten Polyole können einer extraktiven oder vorzugsweise einer destillativen Behandlung unterzogen werden. Die Nachdestillation wird vorzugsweise mit einer kurzen Verweilzeit und Temperaturen von 100 bis 280°C, insbesondere bevorzugt bei einer Temperatur zwischen 250 und 270°C bei einem der Nachkondensation analogen Vakuum und/oder unter Zuführung von Inertgasen durchgeführt. Als Inertgas kommt dabei insbesondere Stickstoff zum Einsatz.

Die extraktive Behandlung erfolgt mit einem Extraktionsmittel in einem breiten Temperaturbereich, vorzugsweise bei Temperaturen von 20 bis 250°C. Als Extraktionsmittel werden vorzugsweise inerte Lösungsmittel, insbesondere aliphatische oder cycloaliphatische Kohlenwasserstoffe, wie beispielsweise Hexan, Heptan, Cyclohexan und Methylcyclohexan, oder deren Gemische verwendet.

Die Entfernung der Niedermolekularen läßt sich in handelsüblichen Apparaten für die flüssig-flüssig-Extraktion diskontinuierlich, z.B. im Rotationsperforator, oder kontinuierlich durch Gegenstrom im Rohr durchführen. Verbleibende Lösungsmittelreste aus der Extraktion lassen sich leicht durch eine anschließende Behandlung im Vakuum, vorzugsweise bei erhöhter Temperatur, entfernen.

Die so hergestellten Polyesterpolyole und/oder Polyetheresterpolyole werden, gegebenenfalls im Gemisch mit weiteren höhermolekularen Verbindungen mit mindestens zwei reaktiven Wasserstoffatomen, wie weiter unten beschrieben, mit den übrigen Komponenten zu den erfindungsgemäßen Polyurethanhartschäumen umgesetzt.

Diese Schaumstoffe weisen bei einem gleichbleibend hohem mechanischen Eigenschaftsniveau eine hohe Härte und eine niedrige Wärmeleitfähigkeit auf und eignen sich insbesondere für die Verwendung im Isolierbereich und zur Herstellung von Sandwichelementen.

Das erfindungsgemäße Verfahren hat den Vorteil, daß durch die schonende Polykondensation in der 1. Stufe eine homogene Polykondensations-Umesterungsreaktion abläuft, die durch die Modifizierung in der 2. Stufe zu homogenen Polyolen führt, die zu harten Polyurethanschäumen mit hervorragenden Eigenschaften verarbeitet werden können. Die sonst üblichen Nebenreaktionen, Produktspaltungen und erheblichen Molekulargewichtsverschiebungen, insbesondere Verbreiterungen der Molekulargewichtsverteilungen, die zu starken Ausfällungen und Qualitätseinbußen führen, werden vollständig bzw. weitgehend vermieden.

Daß bei Verwendung der erfindungsgemäßen speziell hergestellten Polyesterpolyole und/oder Polyetheresterpolyole die Aufgabe der Erfindung gelöst werden konnte, war überraschend. Es wäre vielmehr zu erwarten gewesen, daß durch die stufenweise Polykondensation/Umesterung, ähnlich wie bei den bisherigen Verfahren aus dem Stand der Technik, trübe, inhomogene Polyole entstehen, deren Trübung sofort oder nach kurzem oder längerem Stehen oder im Gemisch der polyolischen Polyurethankomponente auftreten.

Zur Herstellung der Polyurethanhartschaumstoffe nach dem erfindungsgemäßen Verfahren finden, neben den oben beschriebenen speziellen Polyesterpolyolen und/oder Polyetheresterpolyolen, die an sich bekannten Aufbaukomponenten Verwendung, zu denen im einzelnen folgendes auszuführen ist.
a) Als organische und/oder modifizierte organische Polyisocyanate (a) kommen die an sich bekannten aliphatischen, cycloaliphatischen, araliphatischen und vorzugsweise die aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecandiioscyanat, 2-Ethyl-tetramethylendiisocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Di-phenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat.
   Die modifizierten Polyisocyanate können miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat gegebenenfalls gemischt werden.
   Besonders bewährt haben sich als organische Polyisocyanate und kommen daher vorzugsweise zur Anwendung: Mischungen aus Toluylendiisocyanaten und Roh-MDI oder Mischungen aus modifizierten, Urethangruppen enthaltenden organischen Polyisocyanaten mit einem NCO-Gehalt von 33,6 bis 15 Gew.-%, insbesondere solche auf Basis von Toluylendiisocyanaten, 4,4'-Diphenylmethandiisocyanat, DiphenylmethandiisocyanatIsomerengemischen oder Roh-MDI und insbesondere Roh-MDI mit einem Diphenylmethandiisocyanat-Isomerengehalt 30 bis 80 Gew.-%, vorzugsweise von 30 bis 60 Gew.-%, insbesondere von 30 bis 55 Gew.-%.
   Als spezielle Polyesterpolyole und/oder Polyetheresterpolyole werden die erfindungsgemäß hergestellten, wie weiter oben beschrieben, verwendet. Daneben können weitere höhermolekulare Verbindungen mit mindestens zwei reaktiven Wasserstoffatomen in einer Menge von 10 bis 90 Gew.-%, vorzugsweise 20 bis 60 Gew.-%, bezogen auf das Gewicht der Komponente (b) mitverwendet werden.
   Als weitere höhermolekulare Verbindungen mit mindestens zwei reaktiven Wasserstoffatomen werden zweckmäßigerweise solche mit einer Funktionalität von 2 bis 8, vorzugsweise 2 bis 6, und einem Molekulargewicht von 300 bis 8000, vorzugsweise von 300 bis 3000, verwendet. Der Einsatz hängt von den gewünschten Eigenschaften des herzustellenden Polyurethanhartschaumstoffes ab. Bewährt haben sich z.B. Polyether-polyamine und/oder vorzugsweise Polyole ausgewählt aus der Gruppe der Polyetherpolyole, Polyesterpolyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole. Der Hydroxylzahl der Polyhydroxylverbindungen beträgt dabei in aller Regel 150 bis 850 mg KOH/g und vorzugsweise 200 bis 600 mg KOH/g.
   Geeignete weitere Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2, polykondensiert.
   Die erhaltenen Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.
   Mitverwendet werden können auch Polyetherpolyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.
   Die Polyetherpolyole, vorzugsweise Polyoxypropylen- und Polyoxypropylen-polyoxyethylenpolyole, besitzen eine Funktionalität von vorzugsweise 2 bis 6 und insbesondere 2 bis 4 und Molekulargewichte von 300 bis 3000, vorzugsweise 300 bis 2000 und insbesondere 400 bis 2000 und geeignete Polyoxytetramethylenglykole ein Molekulargewicht bis ungefähr 3500.
   Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyetherpolyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyetherpolyole können ebenso wie die Polyesterpolyole einzeln oder in Form von Mischungen mitverwendet werden. Ferner können sie mit den Pfropfpolyetherpolyolen oder Polyesterpolyolen sowie den hydroxylgruppenhaltigen Polyesteramiden, Polyacetalen, Polycarbonaten und/oder Polyetherpolyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyetherpolyamine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylenpolyolen mit Aminen oder Ammoniak in Gegenwart von Wasserstoff und Katalysatoren (DE 12 15 373).
c) Die Polyurethanhartschaumstoffe können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Polyurethanhartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Komponente (b) zum Einsatz.
d) Zu Treibmitteln, welche zur Herstellung der Polyurethanhartschaumstoffe verwendet werden, gehören vorzugsweise Wasser, das mit Isocyanatgruppen unter Bildung von Kohlendioxid reagiert, und/oder physikalisch wirkende Treibmittel. Geeignet sind Flüssigkeiten, welche gegenüber den organischen, gegebenenfalls modifizierten Polyisocyanaten inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.
   Vorzugsweise Verwendung finden Wasser, Chlordifluormethan, Chlordifluorethane, Dichlorfluorethane, Pentangemische, Cyclohexan und Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser.
   Diese Treibmittel werden üblicherweise der Komponente (b) zugesetzt. Sie können jedoch der Isocyanatkomponente (a) oder als Kombination sowohl der Komponente (b) als auch der Isocyanatkomponente (a) oder Vormischungen dieser Komponenten mit den übrigen Aufbaukomponenten zugesetzt werden.
   Die eingesetzte Menge des Treibmittels bzw. der Treibmittelmischung liegt bei 1 bis 25 Gew.-%, vorzugsweise 5 bis 15 Gew.-%, jeweils bezogen auf die Polyolkomponente (b).
   Dient Wasser als Treibmittel, so wird es vorzugsweise der Aufbaukomponente (b) in einer Menge von 0,5 bis 5 Gew.-%, bezogen auf die Aufbaukomponente (b) zugesetzt. Der Wasserzusatz kann in Kombination mit dem Einsatz der anderen beschriebenen Treibmittel erfolgen.
e) Als Katalysatoren (e) zur Herstellung der Polyurethanhartschaumstoffe werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen.
   Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyl-diaminodiethylether, Bis-(dimethylaminopropyl)-harnstoff, N-Methyl-bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N''-Tris-(dialkylaminoalkyl)hexahydrotriazine, z.B. N, N', N''-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.
   Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumnydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente (b).
f) Der Reaktionsmischung zur Herstellung der Polyurethanhartschaumstoffe können gegebenenfalls noch weitere Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-%, bezogen auf 100 Gew.-% der Komponente (b), angewandt.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 Gew.-% erreichen kann.
   Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-di-brompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.
   Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf die Komponente (b), zu verwenden.
   Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der erfindungsgemäßen Polyurethanhartschaumstoffe werden die organischen und/oder modifizierten organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenzverhältnis von NCO-Gruppen der Polyisocyanate (a) zur Summe der reaktiven Wasserstoffatome der Komponenten (b) und gegebenenfalls (c) 0,85 bis 1,25:1, vorzugsweise 0,95 bis 1,15:1 und insbesondere 1 bis 1,05:1, beträgt.Falls die Polyurethanhartschaumstoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 1,5 bis 8:1, angewandt.

Die Polyurethanhartschaumstoffe werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Als besonders vorteilhaft hat es sich erwiesen, nach dem Zweikomponentenverfahren zu arbeiten und die Aufbaukomponenten (b), (d), (e) und gegebenenfalls (c) und (f) in der Komponente (A) zu vereinigen und als Komponente (B) die organischen und/oder modifizierten organischen Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers oder einer Rührschnecke durchgeführt werden. Die Formwerkzeugtemperatur beträgt zweckmäßigerweise 20 bis 110°C, vorzugsweise 30 bis 60°C und insbesondere 45 bis 50°C.

Die nach dem erfindungsgemäßen Verfahren hergestellten Polyurethanhartschaumstoffe weisen eine Dichte von 0,02 bis 0,30 g/cm³, vorzugsweise von 0,025 bis 0,24 g/cm³ und insbesondere von 0,03 bis 0,1 g/cm³, auf. Besonders eignen sie sich als Isolationsmaterial im Bau- und Kühlmöbelsektor, z.B. als Zwischenschicht für Sandwichelemente oder zum Ausschäumen von Kühlschrank- und Kühltruhengehäusen sowie im Fernwärmebereich, aber auch als Stütz- und Gestaltungsmaterial im Möbelbereich.

Die Erfindung wird in den nachfolgenden Ausführungsbeispielen näher erläutert.

### Beispiel 1 (Vergleich)

In einem 2 l Reaktionskolben mit Rührer, Thermometer und Destillationseinrichtung wurden 720 g Diethylenglykol mit 225 g Adipinsäure vorgelegt und bei 130°C vollständig geschmolzen. Dazu wurden 555 g PET-Granulat portionsweise hinzugefügt und 10 ppm Titantetrabutylat als Katalysator dosiert. Die Reaktionsmischung wurde bei 220°C unter Entfernung des entstehenden Reaktionswassers polykondensiert bis zu einer für Polyesterole üblichen Säurezahl kleiner als 1 mgKOH/g. Das entstandene trübe, grünfarbige Reaktionsprodukt wies folgende Spezifikation auf:
Hydroxylzahl = 347 mg KOH/g nach DIN 53240
Säurezahl = 0,65 mg KOH/g nach DIN 53402
Viskosität bei 25°C = 120 mPa·s nach DIN 53015

### Beispiel 2 (Vergleich)

In einem 1,5 l Reaktionskolben mit Rührer, Thermometer und Destillationsaufsatz wurden 360 g Diethylenglykol und 113 g Adipinsäure bei 135°C vollständig verflüssigt und anschließend portionsweise mit 278 g PET-Recyclat unter Rühren versetzt. Zur Durchführung der Polykondensation wurde die Reaktionstemperatur auf 220°C erhöht und entstehendes Reaktionswasser unter Normaldruck entfernt. Nachdem eine Säurezahl kleiner als 5 mg KOH/g erreicht war, wurde das restliche Reaktionswasser unter Vakuum entfernt, bis zu einer für Polyesterole üblichen Säurezahl kleiner als 1 mg KOH/g. Das so hergestellte Reaktionsprodukt wies die folgenden Kennzahlen auf:
Hydroxylzahl = 351 mg KOH/g
Säurezahl = 0,47 mg KOH/g
Viskosität bei 25°C = 1041 mPa·s

Das trübe Reaktionsprodukt war dunkelgrün gefärbt.

### Beispiel 3 (erfindungsgemäß)

In einem 2 l Reaktionskolben mit Rührer, Thermometer und Destillationsaufsatz wurden in einer ersten Stufe 40 g einer Losung aus PET-Abfall mit Diethylenglykol bis zu einer Hydroxylzahl von 623 mg KOH/g umgeestert und mit 184 g Phthalsäureanhydrid versetzt. Bei einer Reaktionstemperatur von 230°C wurde unter Vakuum entstehendes Reaktionswasser abdestilliert. Nach einer Reaktionszeit von 5 Stunden wurde das Reaktionsprodukt auf 140°C gekühlt, mit 168 g Adipinsäure und 10 ppm Titantetrabutylat versetzt und in einem weiteren Schritt bei einer Temperatur von 210°C unter Vakuum polykondensiert. Es entstand ein klares, leicht gelb gefärbtes niedrigviskoses Reaktionsprodukt mit der Spezifikation:
Hydroxylzahl = 299 mg KOH/g
Säurezahl = 1,04 mg KOH/g
Viskosität bei 25°C = 2755 mPa·s

### Beispiel 4 (erfindungsgemäß)

In einem 25 l Rührreaktor zur Herstellung von Polyesterolen wurden in einem ersten Reaktionsschritt 2,2 kg Adipinsäure in 6,8 kg Diethylenglykol bei 130°C geschmolzen und unter Rühren mit 13,54 kg PBT versetzt. Bei einer Reaktionstemperatur von 220°C wurde die Polykondensation bis zu einer Säurezahl kleiner als 8 mg KOH/g durchgeführt. Anschließend wurde das Reaktionsprodukt mit 10 ppm Sn-II-isooctoat versetzt und durch Anlegen von Vakuum in einem zweiten Schritt entwässert. Das entstandene hellgelbe Produkt war klar und wies folgende Kennzahlen auf.
Hydroxylzahl = 253 mg KOH/g
Säurezahl = 0,74 mg KOH/g
Wassergehalt = 0,06 %
Viskosität bei 75°C = 467 mPa·s

### Beispiel 5 (erfindungsgemäß)

In einem 25 l Reaktor zur Herstellung von Polyesterolen wurden in einem ersten Reaktionsschritt 12,8 kg Diethylenglykol und 4,0 kg Phthalsäureanhydrid bei einer Temperatur von 130°C verflüssigt. Nach Zugabe von 9,9 kg PET-Recyclat unter Rühren wurde die Reaktionstemperatur auf 210°C erhöht und das entstehende Reaktionswasser unter Normaldruck und restliches Reaktionswasser unter Vakuum entfernt. 15,0 kg des entstandenen Polykondensats mit einer Hydroxylzahl von 380 mg KOH/g, einer Säurezahl von 0,77 mg KOH/g und einer Viskosität von 1787 mPa·s bei 75°C wurden in einem anschließenden Reaktionsschritt mit 0,3 % wäßriger KOH als Katalysator versetzt und mit 4,5 kg Ethylenoxid unter Druck im Autoklaven alkoxyliert, danach mit Phosphorsäure neutralisiert und durch Filtration von den entstehenden Salzen befreit. Das leicht getrübte Reaktionsprodukt besaß die Kennwerte:
Hydroxylzahl = 301 mg KOH/g
Säurezahl = 0,42 mg KOH/g
Viskosität bei 25°C = 1014 mPa·s

### Beispiel 6 (Vergleich)

Die Polyolkomponente, bestehend aus
- 50 Masse-Teilen (MT): eines Polyesterols auf Basis Adipinsäure, Diethylenglykol und PET (aus Beispiel 1), OH-Zahl 347 mg KOH/g,
- 31 MT: eines Polyetherols auf Basis von Saccharose, Glycerin und Propylenoxid, OH-Zahl 400 mg KOH/g,
- 1 MT: Silikonstabilisator B 8409 (Fa. Goldschmidt),
- 1 MT: Dimethylcyclohexylamin,
- 2 MT: Wasser und
- 15 MT: R 141 b,
wurde mit 110 MT Roh-MDI, NCO-Gehalt 31,5 Masse %, intensiv vermischt (Kennzahl 110).

Der entstandene Schaum wies freigeschäumt im Schäumbecher eine dichte von 31,0 kg/m³ auf.

Die erhaltenen Schäume wurden mittels Bolzentest auf ihre Aushärtung und mittels Schlauchtest auf ihre Fließfähigkeit untersucht.

### Bolzentest

Mit einem genormten Bolzen von 20 mm Durchmesser wird die Eindringkraft in den Schaum in bestimmten Zeitabständen nach der Herstellung gemessen. Dabei dringt der Bolzen 10 mm in den Schaum ein.

### Schlauchtest

100 g reagierendes Gemisch werden unmittelbar nach der Vermischung der Komponenten in einen Endlos-Schlauch aus einer Kunststoffolie mit einem Durchmesser von 4,5 cm gegossen. Der Schlauch wird danach abgeklemmt und die erreichte Schaumlänge als Maß für die Fließfähigkeit genommen.

Die erhaltenen Ergebnisse sind in Tabelle 1 dargestellt.

### Beispiel 7 (Vergleich)

Eine Polyolkomponente, gemäß Beispiel 6, die aber
- 50 MT: eines Polyesterols auf Basis Adipinsäure, Diethylenglykol und PET (aus Beispiel 2),
OH-Zahl 351 mg KOH/g,
enthielt,
wurde mit 100,5 MT Roh-MDI intensiv vermischt (Kennzahl 110). Der entstandene Schaum wies eine Dichte von 31,5 kg/m³ auf.

### Beispiel 8 (erfindungsgemäß)

Eine Polyolkomponente, gemäß Beispiel 6, die aber
- 50 MT: eines Polyesterols auf Basis Adipinsäure, Phthalsäureanhydrid, Diethylenglykol und PET (aus Beispiel 3),
OH-Zahl 299 mg KOH/g, enthielt,
wurde mit 105 MT Roh-MDI intensiv vermischt (Kennzahl 110). Der entstandene Schaum wies eine Dichte von 29 kg/m³ auf.

### Beispiel 9 (erfindungsgemäß)

Eine Polykomponente, gemäß Beispiel 6, die aber
- 50 MT: eines Polyesterols auf Basis Adipinsäure, Diethylenglykol und PBT (aus Beispiel 4),
OH-Zahl 253 mg KOH/g,
enthielt,
wurde mit 98 MT Roh-MDI intensiv vermischt (Kennzahl 110). Der entstandene Schaum wies eine Dichte von 29,5 kg/m³ auf.

### Beispiel 10 (erfindungsgemäß)

Eine Polykomponente, gemäß Beispiel 6, die aber
- 50 MT: eines Polyetheresterols auf Basis Phthalsäureanhydrid, Diethylenglykol, PET und Ethylenoxid (aus Beispiel 5),
OH-Zahl 301 mg KOH/g.
enthielt,
wurde mit 105 MT Roh-MDI intensiv vermischt (Kennzahl 110). Der entstandene Schaum wies eine Dichte von 30 kg/m³ auf.

**Tabelle 1**

| Ergebnisse des Bolzen- und Schlauchtestes | | | | | |
|---|---|---|---|---|---|
| | Bsp. 6 | 7 | 8 | 9 | 10 |
| Eindringkraft (N) | | | | | |
| nach 3 min | 8 | 12 | 25 | 21 | 20 |
| nach 5 min | 12 | 21 | 55 | 50 | 48 |
| Schaumlänge (cm) | 130 | 134 | 150 | 148 | 145 |

Die erfindungsgemäßen Polyole waren sofort nach der Herstellung und nach einer Lagerung von 4 Wochen homogen. Die Verarbeitung sowohl der Polyole sofort nach ihrer Herstellung als auch nach einer 4wöchigen Lagerung zu homogenen Polyurethansystemen war für verschiedene Anwendungen, d.h. mit unterschiedlichen Systembestandteilen, in allen Fällen möglich.

Die Polyurethanhartschaumstoffe auf Basis der erfindungsgemäßen Polyole wiesen gegenüber den Vergleichspolyolen eine wesentlich bessere Aushärtung und ein besseres Fließverhalten auf.

## Patentansprüche

1. Verfahren zur Herstellung von Polyurethanhartschaumstoffen durch Umsetzung von
a) organischen und/oder modifizierten organischen Di- und/oder Polyisocyanaten mit
b) speziellen Polyesterpolyolen und/oder Polyetheresterpolyolen, herstellbar durch Polykondensation von Dicarbonsäuren mit mehrfunktionellen Alkoholen unter Verwendung von Polyalkylenterephthalaten und gegebenenfalls anschließende Umsetzung mit niederen Alkylenoxiden, sowie gegebenenfalls weiteren höhermolekularen Verbindungen mit mindestens zwei reaktiven Wasserstoffatomen und gegebenenfalls
c) Kettenverlängerungs- und/oder Vernetzungsmitteln
in Gegenwart von
d) Treibmitteln,
e) Katalysatoren sowie gegebenenfalls
f) weiteren Hilfsmitteln und/oder Zusatzstoffen,
dadurch gekennzeichnet, daß die Herstellung der Polyesterpolyole und/oder Polyetheresterpolyole in einer stufenweisen Polykondensation erfolgt, wobei neben den Ausgangskomponenten in der ersten Stufe Polyalkylenterephthalat in die beginnende und/oder laufende Kondensation eingetragen wird und in mindestens einer weiteren Stufe katalytisch wirksame Substanzen zugegeben werden.

2. Verfahren nach Anspruch 1, dadurch gekennzeichnet, daß das Polyalkylenterephthalat bei einer Temperatur der Ausgangskomponenten bzw. des Kondensationsgemisches von 150 bis 250°C zugegeben wird.

3. Verfahren nach Anspruch 1 oder 2, dadurch gekennzeichnet, daß das zugesetzte Polyalkylenterephthalat unter Normaldruck oder unter leichtem Vakuum von 1 bis 200 mbar zugegeben wird.

4. Verfahren nach einem der Ansprüche 1 bis 3, dadurch gekennzeichnet, daß Gemische verschiedener Polyalkylenterephthalate eingesetzt werden.

5. Verfahren nach einem der Ansprüche 1 bis 4, dadurch gekennzeichnet, daß Polyalkylenterephthalatabfälle eingesetzt werden.

6. Verfahren nach einem der Ansprüche 1 bis 5, dadurch gekennzeichnet, daß das Polyalkylenterephthalat Polyethylenterephthalat oder Polybutylenterephthalat ist.

7. Verfahren nach einem der Ansprüche 1 bis 6, dadurch gekennzeichnet, daß als Dicarbonsäuren Adipinsäure, Glutarsäure, Bernsteinsäure und/oder Phthalsäure und/oder deren Anhydride eingesetzt werden.

8. Verfahren nach einem der Ansprüche 1 bis 7, dadurch gekennzeichnet, daß als mehrfunktionelle Alkohole Alkandiole und/oder Alkantriole und/oder Etherdiole eingesetzt werden.

9. Verfahren nach einem der Ansprüche 1 bis 8, dadurch gekennzeichnet, daß als katalytisch wirksame Substanzen Titan- und/oder Zinnverbindungen und/oder Lewissäuren eingesetzt werden.

10. Verwendung der nach einem der Ansprüche 1 bis 9 hergestellten Polyurethanhartschaumstoffe als Isoliermaterial für den Kühl- und Fernwärmebereich, als Sandwichmaterial im Bauwesen sowie als Stütz- und Gestaltungsmaterial im Möbelbereich.
